(19) Europäisches Patentamt
European Patent Office
Office européen des brevets

(11) **EP 0 594 485 B1**

(12) **FASCICULE DE BREVET EUROPEEN**

(45) Date de publication et mention
de la délivrance du brevet:
**08.01.1997 Bulletin 1997/02**

(51) Int. Cl.[6]: **C01B 25/37**

(21) Numéro de dépôt: **93402544.6**

(22) Date de dépôt: **15.10.1993**

(54) **Procédé de traitement des composés solubles du thorium et nouveau phosphate de thorium ainsi obtenu**

Verfahren zur Behandlung der löslichen Verbindungen von Thorium und das hergestellte Thoriumphosphat

Process for the treatment of the soluble compounds of thorium and the obtained thorium phosphate

(84) Etats contractants désignés:
**AT BE CH DE DK ES FR GB GR IE IT LI LU NL PT SE**

(30) Priorité: **19.10.1992 FR 9212463**

(43) Date de publication de la demande:
**27.04.1994 Bulletin 1994/17**

(73) Titulaire: **RHONE-POULENC CHIMIE**
**92408 Courbevoie Cédex (FR)**

(72) Inventeurs:
• **Delloye, Thierry**
**F-17180 Perigny (FR)**
• **Le Loarer, Jean-Luc**
**F-30340 Salindres (FR)**
• **Leveque, Alain**
**F-17000 La Rochelle (FR)**

• **Lindecker, Catherine**
**91400 ORSAY (FR)**
• **Genet, Michel**
**91120 PALAISEAU (FR)**

(74) Mandataire: **Dubruc, Philippe et al**
**RHONE-POULENC CHIMIE,**
**Direction de la Propriété Industrielle,**
**25, Quai Paul Doumer**
**92408 Courbevoie Cédex (FR)**

(56) Documents cités:
**DE-A- 2 135 699          US-A- 3 351 436**

• **PATENT ABSTRACTS OF JAPAN vol. 12, no. 491 (C-554)(3338) 21 Décembre 1988 & JP-A-63 201 015**

## Description

La présente invention a trait à un procédé de traitement industriel des composés solubles du thorium, permettant plus particulièrement d'amener cet élément sous une forme à la fois insoluble et non lixiviable, et ceci dans le but notamment de lutter contre les problèmes de pollution liés aux rejets et/ou au stockage des produits du thorium et autres matières radioactives.

On sait que certaines industries, en particulier celles qui reposent sur les traitements hydrométallurgiques des minerais, peuvent conduire, lorsque les minerais traités contiennent entre autres du thorium (monazite, urano-thioranite par exemple) à la production de divers sels de thorium naturel, tels que généralement des chlorures ou des nitrates, qui sont fortement solubles dans l'eau.

Or, compte tenu en particulier de leur radioactivité intrinsèque, ces sels de thorium n'ont malheureusement pu trouver jusqu'à présent que des applications encore assez limitées. En conséquence, et dans l'attente de débouchés potentiels futurs pour le thorium, les excédents de production actuels se ramènent globalement à de simples sous-produits aujourd'hui non valorisables, que l'on stocke avec les plus grands soins et à grands frais, et ceci pour éviter tout préjudice qui pourrait être causé à l'homme et/ou à l'environnement. A cet égard, on notera qu'en terme de radiotoxicité, le thorium 232, qui est le radioisotope père de la famille du thorium, est soumis à ce jour à des normes sanitaires, notamment au niveau de sa présence dans les eaux, qui sont extrèmement strictes et sévères.

Partant de ce constat, il est alors apparu à la demanderesse que les problèmes ci-dessus, notamment de stockage, pourraient de fait être limités, voire éliminés, s'il était possible d'amener la totalité du thorium, initialement présent sous la forme d'un de ses sels solubles par exemple dans des effluents, résidus, déchets et analogues, à l'état d'un composé final qui soit le plus insoluble et le moins lixiviable possible, c'est à dire à un état parfaitement inerte vis à vis de l'extérieur, en particulier de l'environnement. Non seulement l'effluent généré par l'opération d'insolubilisation serait ainsi débarassé du thorium indésirable et pourrait ensuite être éventuellement valorisé, mais en outre la récupération du thorium se ferait alors sous une forme directement stockable, et ceci de manière sûre et économique.

Poursuivant son idée que l'insolublisation totale du thorium constituait un préalable nécessaire pour espérer obtenir un stockage à la fois économique et ne présentant durablement aucun impact nocif ou nuisible pour l'environnement , la Demanderesse a alors orienté ses travaux vèrs des composés insolubles du type phosphates de thorium. En effet, ces produits se sont révélés être les sels de thorium possédant les solubilités les plus faibles. Dès lors, en arrivant à maîtriser parfaitement, et ceci sur une échelle industrielle, la synthèse des phosphates de thorium à partir des composés solubles du thorium, il deviendrait possible de disposer d'un outil efficace pouvant permettre à la fois (i) d'obtenir des effluents débarrassés en cette espèce, et donc par la suite potentiellement valorisables, (ii) de stocker le thorium sous sa forme la plus insoluble, et par là la plus inerte, et enfin même, éventuellement, (iii) d'utiliser les phosphates ainsi préparés en tant que matière d'enrobage et/ou de protection pour le stockage des autres déchets radioactifs.

Il faut noter ici que des voies d'accès à des produits du type phosphates de thorium ont déja été décrites dans la littérature. Ainsi, plus précisemment, on sait qu'ils peuvent être obtenus par réaction directe entre d'une part une solution d'un sel soluble de thorium (nitrate, chlorure) et, d'autre part, un phosphate alcalin ou de l'acide phosphorique (voir notamment Paul PASCAL, "Nouveau Traité de Chimie Minérale", Tome IX, éd.1963, page 1132 et suiv.). Toutefois, on obtient dans tous les cas des gels qui sont extrèmement difficiles, voire impossibles, à filtrer. En conséquence, de telles voies de synthèse se relèvent pour l'homme de l'art tout à fait inapplicables et exclues pour la mise en oeuvre de procédés devant opérer des traitements sur une échelle véritablement industrielle, et vont donc finalement à l'encontre de l'un des objectifs essentiels assignés à la présente invention.

Dans le but de résoudre tous les problèmes ci-dessus, il est maintenant proposé selon la présente invention un procédé de traitement des composés solubles du thorium, ledit procédé étant caractérisé par le fait qu'il comprend les étapes suivantes :

(i) on fait tout d'abord réagir, en milieu aqueux, lesdits composés solubles du thorium avec une base de manière à précipiter ainsi un hydroxyde de thorium,

(ii) puis on fait réagir, toujours en milieu aqueux, le précipité obtenu à l'étape (i) avec un composé capable de libérer des ions phosphates, de manière à obtenir ainsi un précipité de phosphate de thorium,

(iii) et enfin on sépare le précipité de phosphate de thorium ainsi obtenu du milieu de précipitation.

De manière résumée, le procédé selon l'invention présente notamment les nombreux avantages suivants :

- il permet tout d'abord une excellente insolubilisation du thorium 232 ainsi que de ses produits de filiation, en particulier le radium 228, ce qui conduit à des effluents très épurés en radioactivité, notamment au regard des normes sanitaires actuelles; en outre, une éventuelle valorisation ultérieure des effluents générés est ainsi, dans certains cas, rendue possible (en cas de formation de nitrate d'ammonium par exemple)

- le précipité final de phosphate de thorium présente ensuite une très bonne filtrabilité, ce qui constitue une propriété extrèmement importante pour que le procédé puisse être exploité de manière viable sur une échelle industrielle, en particulier si l'on envisage de réaliser un procédé opérant en continu et/ou d'éliminer par lavage certains éléments solubles génants pour l'environnement (cas des nitrates par exemple)

- en outre, les radionucléides contenus dans ce précipité présentent une lixiviabilité extrèmement faible, ce qui est un critère de garantie pour un stockage durable et à très long terme des produits (éviter notamment leur lessivage par, par exemple, des eaux de ruissellement)

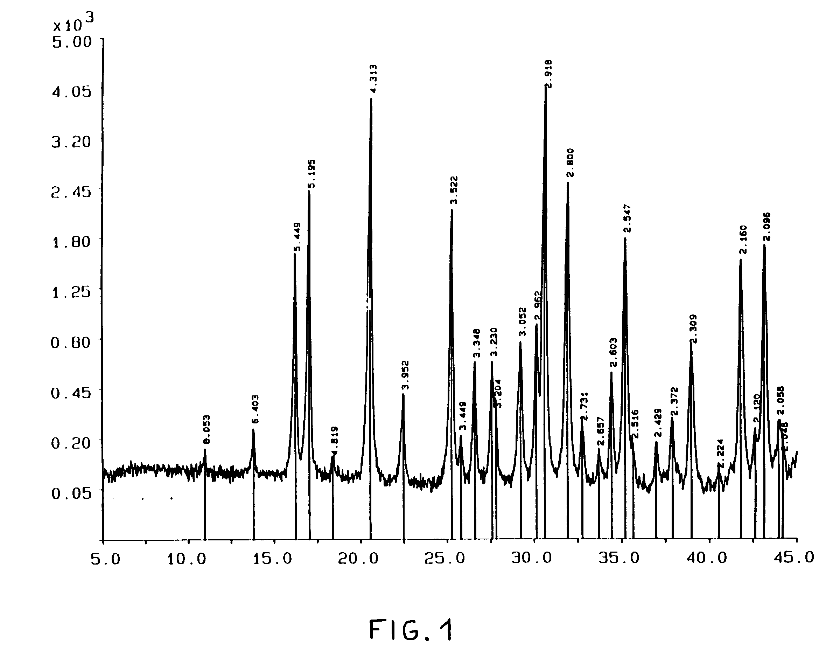

- enfin, il permet de conduire, sous certaines conditions explicitées plus en détails par la suite, à un nouveau phosphate de thorium, correspondant à un produit de formule $Th_3(PO_4)_4$ mais présentant une phase non encore connue et/ou publiée et/ou indéxée à ce jour. Le spectre de diffraction X de cette nouvelle phase est donnée à la figure 1. Il s'agit d'une structure de type orthorhombique.

Mais d'autres caractéristiques, aspects et avantages de l'invention apparaitront encore plus complètement à la lecture de la description qui va suivre, ainsi que des divers exemples concrêts, mais nullement limitatifs, destinés à l'illustrer.

Dans l'exposé qui suit de la présente invention, on entend par composés solubles du thorium, les composés solubles dans l'eau. A titre d'exemples non limitatifs de tels composés, on peut citer plus particulièrement les nitrates, les sulfates, les halogénures, et notamment les chlorures. Les sels solubles de thorium les plus couramment rencontés dans les productions industrielles sont les nitrates et les chlorures, qui constituent ainsi des matières premières de choix pour la mise en oeuvre du procédé selon l'invention.

Bien entendu, selon l'invention, on peut traiter indifféremment soit des flux aqueux industriels bruts contenant déja sous forme dissoute ces composés solubles (traitement direct), soit des solutions qui auront été obtenues par dissolution préalable dans l'eau desdits composés initialement à l'état solide (solutions de synthèse).

Dans la première étape du procédé selon l'invention, on fait donc réagir une solution d'un composé soluble du thorium avec une base. Par base, on entend ici un composé capable de libérer des ions hydroxydes $OH^-$, de manière à engendrer, dans les conditions de la réaction, la formation d'un précipité d'hydroxyde de thorium. A titre de bases convenables et des plus généralement utilisées, on peut notamment citer l'ammoniaque et les hydroxydes d'alcalins, en particulier la soude ou la potasse. L'ammoniaque convient particulièrement bien et constitue la base préférée; ainsi, lorsque l'on traite par cette dernière une solution de nitrate de thorium, le sous-produit obtenu est alors du nitrate d'ammonium.

La réaction entre le composé du thorium et la base est de préférence conduite en maintenant constant, ou sensiblement constant, le pH du milieu de précipitation.

Par pH constant, ou sensiblement constant, on entend ici une régulation du pH à plus ou moins une unité de pH autour de la valeur de consigne fixée. Il a été trouvé que la plage optimale de travail, au niveau des pH, était située entre 4 et 8, et ceci pour une température de réaction correspondant à la température ambiante (18 - 25°C). Une manière pratique d'opérer consiste par exemple à introduire en continu dans un réacteur, et en maintenant constant le rapport entre les débits des flux de réactifs, la solution contenant les sels de thorium d'une part et une solution de base d'autre part. La température du milieu de réaction ne revêt, quant à elle, aucun caractère critique. La réaction est conduite jusqu'à précipitation totale du thorium.

A l'issue de cette première étape, on introduit alors dans la suspension contenant le précipité, un second composé contenant des ions phosphates (agent phosphatant), et ceci de manière à précipiter du phosphate de thorium. A titre de composés contenant des ions phosphates, on peut notamment mettre en oeuvre soit de l'acide phosphorique, soit un sel soluble de phosphate, soit un mélange de ceux-ci. Les sels solubles de phosphate les plus couramment utilisés selon l'invention sont les phosphates d'alcalins, notamment de sodium, et le phosphate d'ammonium.

On notera qu'au lieu d'introduire l'agent phosphatant directement dans le milieu de précipitation issu de l'étape (i), il est bien évidemment également possible de tout d'abord séparer le précipité à base d'hydroxyde de thorium, puis de faire réagir celui-ci avec l'agent phosphatant ; cette dernière manière de procéder est simplement plus compliquée, n'apporte pas d'avantages particuliers au niveau du produit final obtenu et, pour ces raisons, n'est pas préférée.

Comme pour la mise en oeuvre de la première étape du procédé selon l'invention, cette deuxième étape est avantageusement conduite en régulant le pH du milieu de précipitation. Les meilleurs résultats sont alors obtenus en maintenant le pH à une valeur constante, ou sensiblement constante, et supérieure à 5.

La température à laquelle peut être conduite la réaction n'est pas critique, et elle correspond généralement à la température ambiante (18°C - 25°C).

Le phosphate de thorium issu de cette deuxième étape est alors aisément séparé de la suspension résultante, notamment par filtration, ou tout autre technique séparative telle que décantation, essorage ou centrifugation par exemple. De préférence, on met en oeuvre une étape simple de filtration. Cette dernière caractéristique constitue en effet l'un des avantages essentiels du procédé de traitement selon l'invention. Le produit ainsi récupéré peut alors être ensuite éventuellement lavé, et les sels contenus dans les eaux-mères, qui présentent alors une très faible radioactivité résiduelle, éventuellement valorisés.

Le phosphate de thorium récupéré peut ensuite être éventuellement calciné, puis mis en forme, ces opérations n'altérant en rien les excellentes caractéristiques de lixiviabilité du produit originel.

Le phosphate de thorium obtenu par le procédé selon l'invention et en mettant en oeuvre de l'acide phosphorique comme agent phosphatant, constitue un second objet de la présente invention. Comme indiqué précédemment dans la description, ce phosphate de thorium semble globalement répondre à la formule théorique générale connue $Th_3(PO_4)_4$, à cette différence près néanmoins qu'il se présente, après calcination réalisée à une température supérieure à 800°C, sous la forme d'une phase cristalline de type orthorhombique non connue à ce jour, ou du moins non encore répertoriée dans les fichiers classiques de cristallographie (fichier ASTM notamment). Le spectre de diffraction aux rayons X du produit selon l'invention, après calcination à 900°C, est donné à la figure 1. Ce produit est très insoluble et très peu lixiviable.

Des exemples illustrant l'invention vont maintenant être donnés.

Dans ces exemples, un montage particulier pour la mise en oeuvre du procédé selon l'invention a été réalisé et se compose de deux réacteurs montés en série, le réacteur n°1 surversant totalement dans le réacteur n°2. La suspension issue du réacteur n°2 est filtrée. Un test de filtration (défini ci-après) permet de caractériser sa filtrabilité. Les eaux-mères collectées ont été analysées. Le solide filtré (phosphate de thorium pur ou complexe) a été caractérisé par un test standart de lixiviation (norme AFNOR X 31-210).

Définition du test de filtrabilité

La mesure de filtrabilité s'effectue sur 100 ml de suspension sous un vide de 600 mm de mercure. La cellule filtrante est munie d'un filtre MILLIPORE de 0,45 micron. La surface filtrante utilisée est 13,2 $cm^2$. Le filtrat est récupéré dans une éprouvette graduée. La filtrabilité F s'exprime en ml/$cm^2$/h selon la relation :

$$F = \frac{V \times 3600}{t \times S}$$

dans laquelle:

- V est le volume de filtrat en ml

- S est la surface filtrante en $cm^2$

- t est le temps de filtration en seconde.

**Exemple 1**

Cet exemple illustre l'utilisation d'ammoniaque comme base dans le réacteur n°1 et de phosphate trisodique comme agent phosphatant dans le réacteur n°2.

Le réacteur n°1 est alimenté en continu par les deux flux suivants :

- une solution de nitrate de thorium de concentration 0,265 mole/litre et contenant en outre 62200 Bq/l de Radium 228, le dédit d'introduction de cette solution étant constant et fixé à 0,55 l/heure (flux n°1)

- une solution d'ammoniaque de concentration 6N, avec un dédit constant d'introduction fixé à 0,097 l/h (flux n°2).

Le pH est maintenu constamment égal à 6 dans le réacteur n°1, et le temps de séjour moyen des produits dans ce réacteur est de l'ordre de 30 minutes.

Le réacteur n°2 est, quant à lui, alimenté d'une part par la surverse du réacteur n°1 ci-dessus et, d'autre part, par un troisième flux constitué d'une solution de phosphate trisodique de concentration 0,5 mole/litre introduite avec un débit constant de 0,53 l/h (flux n°3).

Le pH dans ce deuxième réacteur est égal à 10,1 et le temps de séjour moyen des produits de l'ordre de 30 minutes.

Les différents résultats obtenus sont les suivants :

1- L'analyse des eaux-mères (flux liquide sortant du réacteur n°2, après filtration du précipité) indiquent une teneur en thorium , exprimée sous la forme $ThO_2$, inférieure à 0,1 mg/litre, équivalent à un rendement d'insolubilisation du thorium supérieure à 99,999%. En outre, la teneur en radium 228 dans ces eaux-mères est de 1,3 Bq/l, soit un rendement d'insolubilisation de cette espèce supérieure à 99,99%.

2- Le précipité formé dans le réacteur n°2 (obtenu avec un rendement de 48,1 g/heure en équivalent sec) présente, après filtration, lavage à l'eau puis séchage, la composition pondérale suivante :
    Th : 70% ; P : 7,7% ; Na : 1,9% ; O : 20,4%

3- La filtrabilité de la pulpe sortant du réacteur n°2 est égale à 1260 ml/$cm^2$/h (mesurée sous un vide de 500 mm Hg et en utilisant un filtre de 0,45 micron). Par comparaison, la précipitation d'un phosphate obtenu par action directe d'une solution de phoshate trisodique (0,53 mole/l ; 0,53 l/h) sur une solution de nitrate de thorium (0,265 mole/l ; 0,55 l/h) donne une pulpe dont la filtrabilité est inférieure à 20 ml/$cm^2$/h.

4- Le précipité de phosphate de thorium obtenu dans le réacteur n°2 est, après filtration puis lavage à l'eau sur filtre, soumis au test de lixiviation selon la norme AFNOR X 31-210.

L'analyse du premier lixiviat donne alors les résultats suivants :

- la concentration en thorium, exprimée sous la forme $ThO_2$, est de 0,85 mg/l, soit une fraction dissoute inférieure à $2,0 . 10^{-3}$ %.

- la concentration en radium 228 est, quant à elle, inférieure à 1 Bq/l, soit une fraction dissoute inférieure à $3,0 . 10^{-3}$ %.

**Exemple n° 2**

Cet exemple illustre l'utilisation d'ammoniaque comme base dans le réacteur n°1 et d'acide phosphorique comme agent phosphatant dans le réacteur n°2.

Le réacteur n°1 est alimenté en continu par les deux flux suivants :

- une solution de nitrate de thorium de concentration 0,568 mole/litre et contenant en outre 84640 Bq/l de radium 228, le débit d'introduction de cette solution étant constant et fixé à 0,47 l/h (flux n°1).

- une solution d'ammoniaque de concentration 6,2 N, avec un débit constant d'introduction fixé à 0,068 l/h (flux n°2).

Le pH est maintenu à 6 dans le réacteur n°1, et le temps de séjour moyen des produits dans ce réacteur est de l'ordre de 30 minutes.

Le réacteur n°2 est, quant à lui, alimenté d'une part par la surverse du réacteur n°1 ci-dessus et, d'autre part, par les deux flux suivants :

- une solution d'acide phosphorique de concentration égale à 7,3 mole/litre, avec un débit constant d'introduction fixé à 0,054 l/h (flux n°3)

- une solution d'ammoniaque de concentration 6,2 N, avec un débit constant d'introduction fixé à 0,088 l/h (flux n°4).

Le pH dans le réacteur n°2 est ainsi régulé à une valeur autour de 6,5 et le temps de séjour moyen des produits dans ce réacteur est de l'ordre de 30 minutes.

Par analogie avec l'exemple 1 ci-dessus, les résultats obtenus sont ici les suivants :

1- Analyse des eaux-mères :

- $[ThO_2] < 0,1$ mg/l, soit un rendement d'insolubilisation du thorium supérieur à 99,999%.

- $[Ra\ 228] = 8$ Bq/l, soit un rendement d'insolubilisation de cette espèce supérieur à 99,98%.

2- Analyse du précipité obtenu dans le réacteur n°2 :

On obtient (avec un rendement de formation de 95,1 g/h en équivalent sec) un produit qui présente, après filtration, lavage à l'eau puis séchage, la composition pondérale suivante :

Th : 64,7 % ; P : 11,5 % ; O : 23,8 %

correspondant au phosphate de thorium de formule $Th_3(PO4)_3$.

3- Filtrabilité de la pulpe sortant du réacteur n°2 :

La filtrabilité, mesurée comme à l'exemple 1, est de 600 $ml/cm^2/h$.

Par comparaison, la précipitation d'un phosphate obtenu par action directe d'une solution d'acide phosphorique (7,3 mole/l ; 0,054 l/h) et d'une solution d'ammoniaque (6,2 N ; 0,156 l/h) sur une solution de nitrate de thorium (0,568 mole/litre ; 0,47 l/h) donne une pulpe dont la filtrabilité est inférieure à 20 $ml/cm^2/h$.

4- Lixiviabilité du phosphate de thorium obtenu :

On procède comme à l'exemple 1.

L'analyse du premier lixiviat donne alors les résultats suivants :

- $[ThO_2] < 0,1$ mg/l, soit une fraction dissoute inférieure à $3,0 . 10^{-4}$ %

- $[Ra\ 228] = 0,5$ Bq/l, soit une fraction dissoute inférieure à $2,0 . 10^{-3}$ %.

**Exemple n° 3**

Le phosphate de thorium récupéré après filtration dans l'exemple 2 est lavé à l'eau, puis calciné à 900°C pendant 2 heures.

Le spectre de diffraction X du phosphate de thorium ainsi calciné est donné à la figure 1. Il ne correspond à aucune des phases des phosphates de thorium répertoriés à ce jour.

Le test de lixiviation effectué sur ce phosphate calciné conduit aux résultats d'analyse suivants (sur premier lixiviat) :

- $[ThO2] < 0,1$mg/l, soit une fraction dissoute inférieure à $3,0 . 10^{-4}$ %

- $[Ra\ 228] = 1$ Bq/l, soit une fraction dissoute inférieure à $4,0 . 10^{-3}$ %.

**Revendications**

1. Procédé de traitement des composés solubles du thorium, caractérisé par le fait qu'il comprend les étapes suivantes :

(i) on fait réagir, en milieu aqueux, lesdits composés solubles du thorium avec une base de manière à précipiter ainsi un hydroxyde de thorium,

(ii) puis on fait réagir, en milieu aqueux, le précipité obtenu à l'étape (i) avec un composé capable de libérer des ions phosphates, de manière à obtenir ainsi un précipité de phosphate de thorium,

(iii) on sépare enfin le précipité de phosphate de thorium obtenu à l'étape (ii) du milieu de précipitation.

2. Procédé selon la revendication 1, caractérisé en ce que ladite base est choisie, seule ou en mélange, parmi l'ammoniaque et les hydroxydes d'alcalins.

3. Procédé selon la revendication 2, caractérisé en ce que l'on utilise l'ammoniaque.

4. Procédé selon l'une quelconque des revendications précédentes, caractérisé en ce que ledit composé capable de libérer des ions phosphates est choisi, seul ou en mélange, parmi l'acide phosphorique et les sels solubles de phosphates.

5. Procédé selon la revendication 4, caractérisé en ce que lesdits sels solubles de phosphates sont choisis, seuls ou en mélanges, parmi les phosphates d'alcalins et le phosphate d'ammonium.

6. Procédé selon l'une quelconque des revendications précédentes, caractérisé en ce que lesdits sels solubles de thorium sont choisis, seuls ou mélanges, parmi les nitrates, les sulfates, et les halogénures.

7. Procédé selon la revendication 6, caractérisé en ce que l'on traite des nitrates et/ou des chlorures de thorium.

8. Procédé selon l'une quelconque des revendications précédentes, caractérisé en ce que la réaction de l'étape (i) est conduite à une valeur de pH constante, ou sensiblement constante, et qui est située entre 4 et 8.

9. Procédé selon l'une quelconque des revendications précédentes, caractérisé en ce que la réaction de l'étape (ii) est conduite à une valeur de pH constante, ou sensiblement constante, et qui est supérieure à 5.

10. Procédé selon l'une quelconque des revendications précédentes, caractérisé en ce que l'étape (iii) de séparation est une étape de filtration.

11. Procédé selon l'une quelconque des revendications précédentes, caractérisé en ce que le précipité de phosphate de thorium récupéré à l'étape (iii) est ensuite lavé.

12. Procédé selon l'une quelconque des revendications précédentes, caractérisé en ce que le précipité de phosphate de thorium récupéré à l'étape (iii) est ensuite calciné.

13. Phosphate de thorium sous forme d'une phase cristalline orthorhombique, caractérisé en ce qu'il est obtenu par la mise en oeuvre d'un procédé tel que défini à l'une quelconque des revendications 1 à 12, et dans lequel le composé capable de libérer des ions phosphates est l'acide phosphonique et le précipité obtenu à l'étape (iii) précitée est calciné à une température supérieure à 800°C.

14. Phosphate de thorium selon la revendication 13, caractérisé en ce qu'il contient en outre du radium, notamment du radium 228.

15. Phosphate de thorium, caractérisé en ce qu'il présente un spectre de diffraction aux rayons X tel que représenté à la figure 1.

16. Utilisation d'un phosphate de thorium tel que défini à l'une quelconque des revendications 13 à 15 comme matière d'enrobage pour l'inertage et/ou le stockage des produits radioactifs.

**Claims**

1. A process for the treatment of soluble thorium compounds, characterized in that it comprises the following steps:

(i) reacting said soluble thorium compounds with a base in an aqueous medium so as to precipitate a thorium hydroxide;
(ii) reacting the precipitate obtained in step (i) in an aqueous medium with a compound which can liberate phosphate ions to obtain a thorium phosphate precipitate;
(iii) separating the thorium phosphate obtained from step (ii) from the precipitation medium.

2. A process according to claim 1, characterized in that said base is selected from ammonia and alkaline hydroxides, used alone or as a mixture.

3. A process according to claim 2, characterized in that ammonia is employed.

4. A process according to any one of the preceding claims, characterized in that said compound which can liberate phosphate ions is selected from phosphoric acid and soluble phosphate salts, used alone or as a mixture.

5. A process according to claim 4, characterized in that said soluble phosphate salts are selected from alkaline phosphates and ammonium phosphate, used alone or as a mixture.

6. A process according to any one of the preceding claims, characterized in that said soluble thorium salts are selected from nitrates, sulphates and halides, used alone or as a mixture.

7. A process according to claim 6, characterized in that thorium nitrates and/or chlorides are treated.

8. A process according to any one of the preceding claims, characterized in that the reaction in step (i) is carried out at a constant or substantially constant pH which is between 4 and 8.

9. A process according to any one of the preceding claims, characterized in that the reaction of step (ii) is carried out at a constant or substantially constant pH which is over 5.

10. A process according to any one of the preceding claims, characterized in that separation step (iii) is a filtering step.

11. A process according to any one of the preceding claims, characterized in that the thorium phosphate precipitate recovered in step (iii) is subsequently washed.

12. A process according to any one of the preceding claims, characterized in that the thorium phosphate precipitate recovered in step (iii) is subsequently calcined.

13. A thorium phosphate in the form of an orthorhombic crystalline phase, characterized in that it is obtained by carrying out the process as defined in any one of claims 1 to 12, in which the compound which can liberate phosphate ions is phosphonic acid and the precipitate obtained in step (iii) is calcined at a temperature of more than 800°C.

14. A thorium phosphate according to claim 13, characterized in that it further contains radium, in particular radium 228.

15. A thorium phosphate, characterized in that it has an X ray diffraction pattern as shown in Figure 1.

16. The use of a thorium phosphate as defined in any one of claims 13 to 15 as a coating material for rendering inert, and/or storage of, radioactive products.

**Patentansprüche**

1. Verfahren zur Behandlung löslicher Verbindungen von Thorium, dadurch gekennzeichnet, daß es die folgenden Stufen umfaßt:

(i) man setzt die löslichen Verbindungen von Thorium mit einer Base in wäßrigem Milieu um, um so ein Thoriumhydroxid auszufällen,

(ii) dann setzt man das in der Stufe (i) erhaltene Präzipitat in wäßrigem Milieu mit einer Verbindung um, die dazu fähig ist, Phosphationen freizusetzen, um so ein Präzipitat von Thoriumphosphat zu erhalten,

(iii) man trennt dann das in der Stufe (ii) erhaltene Präzipitat von Thoriumphosphat aus dem Ausfällungsmilieu ab.

2. Verfahren nach Anspruch 1, dadurch gekennzeichnet, daß die Base, allein oder in Mischung, aus Ammoniak und den Alkalihydroxiden ausgewählt ist.

3. Verfahren nach Anspruch 2, dadurch gekennzeichnet, daß man Ammoniak verwendet.

4. Verfahren nach einem der vorhergehenden Ansprüche, dadurch gekennzeichnet, daß die zur Freisetzung von Phosphationen fähige Verbindung, allein oder in Mischung, aus Phosphorsäure und den löslichen Salzen von Phosphaten ausgewählt ist.

5. Verfahren nach Anspruch 4, dadurch gekennzeichnet, daß die löslichen Salze von Phosphaten, allein oder in Mischungen, aus den Alkaliphosphaten und Anmoniumphosphat ausgewählt ist.

6. Verfahren nach irgendeinem der vorhergehenden Ansprüche, dadurch gekennzeichnet, daß die löslichen Salze von Thorium, allein oder in Mischungen, aus den Nitraten, den Sulfaten und den Halogeniden ausgewählt sind.

7. Verfahren nach Anspruch 6, dadurch gekennzeichnet, daß man Nitrate und/oder Chloride von Thorium behandelt.

8. Verfahren nach einem der vorhergehenden Ansprüche, dadurch gekennzeichnet, daß die Umsetzung des Schrittes (i), bei einem konstanten, oder im wesentlichen konstanten pH-Wert durchgeführt wird, der zwischen 4 und 8 liegt.

9. Verfahren nach einem der vorhergehenden Ansprüche, dadurch gekennzeichnet, daß die Umsetzung der Stufe (ii) bei einem konstanten, oder im wesentlichen konstanten pH-Wert durchgeführt wird, der über 5 liegt.

10. Verfahren nach einem der vorhergehenden Ansprüche, dadurch gekennzeichnet, daß die Stufe (iii) der Antrennung eine Filtrationsstufe ist.

11. Verfahren nach einem der vorhergehenden Ansprüche, dadurch gekennzeichnet, daß das in der Stufe (iii) gewonnene Präzipitat von Thoriumphosphat anschließend gewaschen wird.

12. Verfahren nach einem der vorhergehenden Ansprüche, dadurch gekennzeichnet, daß das in der Stufe (iii) gewonnene Präzipitat von Thoriumphosphat anschließend calciniert wird.

13. Thoriumphosphat in Form einer orthorombischen, kristallinen Phase, dadurch gekennzeichnet, daß es durch die Durchführung eines Verfahrens, wie es in einem der Ansprüche 1 bis 12 definiert ist, erhalten wird und worin die zur Freisetzung von Phosphationen fähige Verbindung Phosphonsäure ist und das in der Stufe (iii) erhaltene vorher erwähnte Präzipitat bei einer Temperatur über 800°C calziniert wird.

14. Thoriumphosphat nach Anspruch 13, dadurch gekennzeichnet, daß es des weiteren Radium, insbesondere Radium 228, enthält.

15. Thoriumphosphat, dadurch gekennzeichnet, daß es ein wie in der Figur 1 dargestelltes Röntgenbeugungsspektrum aufweist.

16. Verwendung eines Thoriumphosphates, wie es in einem der Ansprüche 13 bis 15 definiert ist, als Einbettmasse zum Inertmachen und/oder Lagern von radioaktiven Produkten.

FIG.1